# EUROPEAN PATENT APPLICATION

(11) **EP 3 447 676 A1**
(43) Date of publication of application: **27.02.2019**
(21) Application number: 18190591.0
(22) Date of filing: 23.08.2018
(51) Int. Cl.: G06F 21/88, G06F 21/32, G07C 9/00

(54) **LOCKING MECHANISM OF A MODULE OF A DATA CENTER**

(30) Priority: 23.08.2017 US 201715684658
(71) Applicant: Hewlett Packard Enterprise Development LP, Houston, TX 77070 (US)
(72) Inventor: NORTON, John, Houston, TX Texas 77070 (US); RILEY, Dwight, Houston, TX Texas 77070 (US)
(74) Representative: Haseltine Lake LLP

(57) **Abstract**

Example implementations relate to a locking mechanism of a module of a data center. In some examples, a controller may comprise a processing resource and a memory resource storing machine-readable instructions to receive a request to unlock a locking mechanism of a module of a data center, authenticate a user associated with the request to unlock the locking mechanism by comparing credentials included with the unlock request with permissions associated with the user, and unlock the locking mechanism of the module of the data center in response to the credentials having proper permissions.

## Description

### Background

A data center can include different modules in order to perform processing, distribution, and/or storage of data. For example, a data center can include equipment such as servers, storage devices, power supplies, networking connection devices, and/or security devices, as well as corresponding hardware to mount, support, and/or provide physical access to data center equipment.

Data center modules may be located in a physical location. For example, a data center may include modules stored in a dedicated data center room. The room may have physical access controls in order to provide secure physical access to the data center.

### Brief Description of the Drawings

Figure 1 illustrates an example of a data center module layout consistent with the disclosure.
Figure 2 is a block diagram of an example of a controller to control a locking mechanism of a data center consistent with the disclosure.
Figure 3 is a block diagram of an example of a system consistent with the disclosure.
Figure 4 illustrates an example of a method consistent with the disclosure.

### Detailed Description

A data center can include security measures to prevent physical access to a data center location and/or data center equipment. As used herein, the term "data center" can, for example, refer to a location, such as a building, or a room or multiple rooms in a building that can include equipment including computing systems and/or components of computing systems, such as telecommunications and/or storage systems, among other types of computing systems and/or components of computing systems. Security measures may be utilized to prevent unauthorized users from entering a data center. The security measures may prevent malicious or unintentional actions by unauthorized users, such as uploading malicious software such as viruses and/or malware, as well as removing data center equipment from the data center unlawfully or accidentally, among other actions.

Security measures can include physical access controls to the data center location. For example, doors to a data center may be locked and physically accessible by authorized users. In some examples, data center equipment may include locking mechanisms at the modular equipment level of the data center. For instance, a rack of blade servers of the data center may include a bezel with a locking mechanism that prevents removal of blade servers from the rack of blade servers, where a physical key can control the locking mechanism of the bezel. As used herein, the term "mechanism" can, for example, refer to a component of a system or device to serve a plurality of functions, including but not limited to, software components, electronic components, electrical components, mechanical components, electromechanical components, etc.

The above described security measures may be overcome, allowing unauthorized users' physical access to data center equipment. For example, an unauthorized user may gain physical access to a data center using a fraudulent key, or unlock a bezel of a rack of blade servers, allowing physical access to individual blade servers of the data center.

A locking mechanism of a data center, according to the disclosure, can provide a modular level controller and locking mechanism for data center equipment. The controller can help to prevent unintentional and/or unauthorized removal of data center equipment from the data center. In some examples, the controller can prevent accidental data center downtime, accidental failover/recovery, and/or accidental data loss, as well as prevent uploads of malicious software and/or theft of data center equipment.

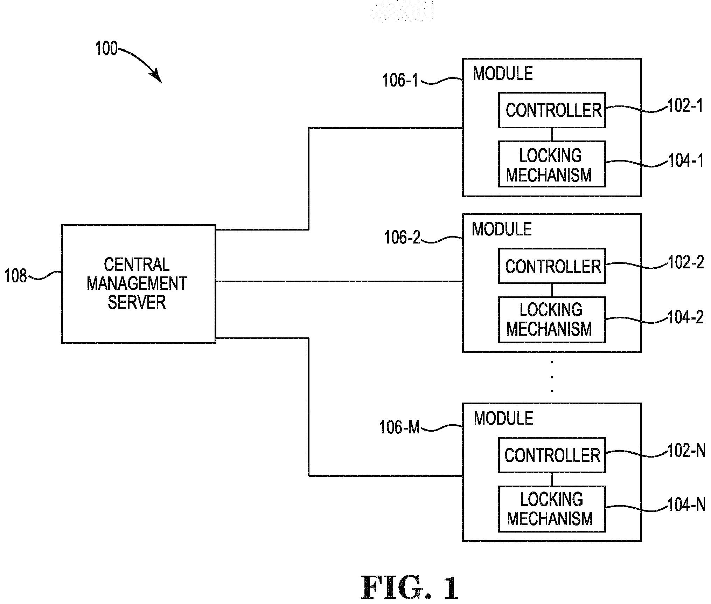

Figure 1 illustrates an example of a data center module layout 100 consistent with the disclosure. As illustrated in Figure 1, the data center module layout 100 may include controllers 102-1, 102-2, 102-N (referred to collectively as controllers 102), locking mechanisms 104-1, 104-2, 104-N (referred to collectively as locking mechanisms 104), modules 106-1, 106-2, 106-M (referred to collectively as modules 106), and central management server 108.

As illustrated in Figure 1, data center module layout 100 can include modules 106. Each module 106 can include a respective controller 102 and locking mechanism 104. For example, module 106-1 can include controller 102-1 and locking mechanism 104-1. As used herein, the term "module" can, for example, refer to a separable and/or interchangeable component of a system. For example, module 106-1 may be a component of the data center that can be separated from the data center, such as a computing device and/or a mechanical module of the data center, as is further described herein.

Controller 102 can receive a request to unlock a locking mechanism 104 of module 106 of the data center. As used herein, the term "locking mechanism" can, for example, refer to a device to secure an object from motion in a position when in the device is in an engaged position, and can allow motion of the object when the device is in a disengaged position. For example, locking mechanism 104-1 may be in an engaged position, securing module 106-1 from motion. Controller 102-1 can receive a request to unlock locking mechanism 104-1.

In some examples, the request to unlock locking mechanism 104 can be received directly by controller 102. For example, module 106 can include an interface with which controller 102 can receive a request to unlock locking mechanism 104. In some instances, the interface can include a universal serial bus (USB) that can receive a request to unlock locking mechanism 104 from a computing device peripheral, such as a keyboard, pointing device (e.g., a mouse), USB storage drive, etc. In some instances, the interface can include a display with a user interface to receive an input, such as a username and/or password. In some instances, the interface can include a biometric device to receive retina scans, fingerprint scans, and/or other biometric information of a user. In some instances, the interface can include a read device to receive the request to unlock from a smart card, such as a common access card. In some instances, the interface can include a key slot to receive, for example, a mechanical key with electronic authentication.

In some examples, controller 102 can directly receive the request to unlock locking mechanism 104 wirelessly. For example, controller 102 can receive a request to unlock locking mechanism 104 wirelessly from a mobile device by, for example, a network relationship. As used herein, the term "network relationship" can, for example, refer to a local area network (LAN), a wireless local area network (WLAN), a virtual local area network (VLAN), wide area network (WAN), personal area network (PAN), a distributed computing environment (e.g., a cloud computing environment), storage area network (SAN), Metropolitan area network (MAN), a cellular communications network, and/or the Internet, among other types of network relationships. A mobile device may, for example, refer to devices that are (or may be) carried and/or worn by a user. For instance, a mobile device can be a phone (e.g., a smart phone), a tablet, a personal digital assistant (PDA), smart glasses, and/or a wrist-worn device (e.g., a smart watch), among other types of mobile devices.

In some examples, controller 102 can receive a request from central management server 108 to unlock a plurality of locking mechanisms 104 of a respective plurality of modules 106 of the data center. For example, controller 102-1 of module 106-1 can receive a request from central management server 108 to unlock locking mechanism 104-1, and controller 102-2 of module 106-2 can receive a request to from central management server 108 to unlock locking mechanism 104-2. In other words, central management server 108 can send a request to unlock multiple locking mechanisms of multiple modules of the data center. In some examples, controller 102 can receive a request from central management server 108 to unlock a single locking mechanism 104 (e.g., locking mechanism 104-1) of a module 106 (e.g., module 106-1).

Controller 102 can authenticate a user associated with the request to unlock locking mechanism 104 by comparing credentials included with the unlock request with permissions associated with the user. As used herein, the term "credentials" can, for example, refer to identifying information of a person. As used herein, the term "permissions" can, for example, refer to an authorization or consent to perform an action, such as unlock a locking mechanism.

Controller 102 can compare credentials, such as an identity of a user requesting to unlock locking mechanism 104, with permissions, which can indicate whether the user has authorization to cause locking mechanism 104 to be unlocked. For example, a data center administrator may have full permissions to unlock locking mechanisms to physically access modules of the data center. Controller 102 can compare credentials of the data center administrator to the permissions of the data center administrator, and based on the data center administrator having requisite permissions, can unlock locking mechanism 104, as is further described herein.

As previously discussed, the unlock request received by controller 102 can include credentials of a user requesting to unlock locking mechanism 104. Credentials can include user information and/or attributes, as is further described herein.

Controller 102 can compare credentials included with the unlock request with permissions. In some examples, the permissions can be stored locally at controller 102. For example, controller 102-1 can receive an unlock request to unlock locking mechanism 104-1, and compare credentials included with the unlock request to permissions stored locally at controller 102-1.

In some examples, the permissions can be stored remotely from controller 102. For example, controller 102-1 can receive an unlock request to unlock locking mechanism 104-1, and compare credentials included with the unlock request to permissions stored remotely from controller 102-1. For instance, permissions may be stored remotely at central management server 108 via a directory service, among other remote storage locations. As used herein, the term "directory service" can, for example, refer to a customizable information store that can function as a point from which resources and/or services may be distributed through a network.

Controller 102 can be interconnected with central management server 108 to allow controller 102 to compare credentials with remotely stored permissions. As used herein, the term "interconnect" or used descriptively as "interconnected" can, for example, refer to a communication pathway established over an information-carrying medium. The "interconnect" may be a wired interconnect, wherein the medium is a physical medium (e.g., electrical wire, optical fiber, cable, bus traces, etc.), a wireless interconnect (e.g., air in combination with wireless signaling technology) or a combination of these technologies.

Credentials included with the request to unlock locking mechanism 104 can include user information. User information can include information about a user requesting to unlock locking mechanism 104. For example, user information can include a user's name, title, biometric information such as retina data, fingerprints, and/or palm prints, among other types of user information.

Controller 102 can compare the user information of the user with permissions associated with the user. For example, a data center administrator may have permissions allowing physical access to various modules of the data center. Controller 102 can compare the user information of the data center administrator with permissions associated with the data center administrator.

Credentials included with the request to unlock locking mechanism 104 can include attributes. Attributes can include information corresponding to a user requesting to unlock locking mechanism 104. For example, attributes can include a username and/or password, credentials associated with a smart card, information corresponding to and/or identifying a mobile device associated with a user (e.g., a mobile telephone number, media access control (MAC) address, etc.), among other types of attributes.

Controller 102 can compare the attributes of the user with permissions associated with the user. For example, a data center administrator may have permissions allowing physical access to various modules of the data center. Controller 102 can compare the attributes of the data center administrator with permissions associated with the data center administrator.

Controller 102 can unlock locking mechanism 104 of module 106 in response to permissions of the user being proper. For example, the permissions of the data center administrator may allow physical access to the modules of the data center, and controller 102 can unlock locking mechanism 104 of module 106 of the data center in response to the data center administrator's request to unlock locking mechanism 104 of module 106 based on the user information and/or the attributes included in the request to unlock locking mechanism 104.

Controller 102 can unlock locking mechanism 104 of module 106 of the data center in response to the credentials included in the unlock request having proper permissions. Unlocking locking mechanism 104 of module 106 can include unlocking locking mechanism 104 of a computing device of the data center and/or a mechanical module of the data center.

In some examples, permission can be tiered. For example, a data center administrator can be granted full permissions to allow for physical access to most or all data center equipment, whereas a technician or other user may be granted partial permissions to allow for the technician to physically access certain data center equipment but not all data center equipment. Other personnel may not be granted permissions to physically access the data center or data center equipment.

Although not illustrated in Figure 1, in some examples, a datacenter can include more than one central management server. For example, a first central management server may control services to two modules, and a second central management server may control services to a different two modules. In such an example, tiered permission of a central management server can be limited to modules the particular central management server controls services to. For example, a data center administrator may be granted full access permissions as to the first central management server, allowing for physical access to the two modules under the first central management server, but not allowing for physical access to the two modules under the second central management server.

Controller 102 can unlock locking mechanism 104 of a computing device of the data center. That is, module 106 can be a computing device. Examples of a computing device of a data center can include a compute node, storage node, rack server, switch blade, storage disks, enclosure managers, a blade enclosure, components of the blade enclosure (e.g., individual compute nodes in the blade enclosure may be unlocked via locking mechanisms of the individual compute nodes in the blade enclosure), storage nodes including storage disks (e.g., individual storage nodes in the blade enclosure, including individual storage disks of storage nodes, may be unlocked via locking mechanisms of the individual storage nodes and/or storage disks in the blade enclosure), a power supply, a fan, etc. In other words, any computing device in the data center that can include a locking mechanism 104 can be unlocked by controller 102. Controller 102 can unlock locking mechanism 104 of the computing device of the data center such that the computing device can be removable from the data center for repair, replacement, maintenance, cleaning, etc.

Controller 102 can unlock locking mechanism 104 of a mechanical module of the data center. That is, module 106 can be a mechanical module of the data center. Examples of a mechanical module of the data center can include an access door, frame, face plate, access panel, cables, etc. In other words, any mechanical module in the data center that can include a locking mechanism 104 can be unlocked by controller 102. Controller 102 can unlock locking mechanism 104 of the mechanical module of the data center for physical access to computing devices of the data center, repair, replacement, and/or cleaning of computing devices of the data center, etc.

In some examples, central management server 108 can receive a request to unlock locking mechanisms 104 of modules 106. For example, central management server 108 can include an interface with which central management server 108 can receive a request to unlock locking mechanisms 104. Similar to the modules 106, in some instances, the interface can include a universal serial bus (USB) that can receive a request to unlock locking mechanism 104 from a computing device peripheral, such as a keyboard, pointing device (e.g., a mouse), USB storage drive, etc. In some instances, the interface can include a display with a user interface to receive an input, such as a username and/or password. In some instances, the interface can include a biometric device to receive retina scans, fingerprint scans, and/or other biometric information of a user. In some instances, the interface can include a read device to receive the request to unlock from a smart card, such as a common access card. In some instances, the interface can include a key slot to receive, for example, a mechanical key with electronic authentication. In some instances, central management server 108 can receive the request to unlock locking mechanisms 104 wirelessly.

Central management server 108 can authenticate a user associated with the request to unlock locking mechanisms 104 by comparing credentials included with the unlock request with permissions, where credentials can include user information and/or attributes.

Central management server 108 can cause controllers 102 to unlock their respective locking mechanisms 104 in response to credentials included with the unlock request of the locking mechanisms 104 having proper permissions. For example, controller 102-1 of module 106-1 can unlock locking mechanism 104-1 and controller 102-2 of module 106-2 can unlock locking mechanism 104-2 in response to credentials included in the unlock request having proper permissions based on a request received by controllers 102-1, 102-2, etc. from central management server 108.

Utilizing central management server 108 to unlock multiple modules 106 can allow a user to efficiently gain physical access to data center equipment. For example, a data center administrator may have to replace multiple storage disks, and can utilize central management server 108 to unlock the multiple storage disks without requesting the unlock of individual locking mechanisms 104 of the multiple storage disks, among other examples.

Controller 102 can refrain from unlocking locking mechanism 104 in response to credentials included with the request to unlock locking mechanism 104 not having proper permissions. For example, a user who may not be authorized to physically access modules 106 of the data center can be prevented from accessing modules 106. By preventing physical access to modules 106 by unauthorized users, controller 102 can reduce a likelihood of an unauthorized user removing modules 106 and/or physically accessing modules 106 in order to upload malicious software, etc.

Controller 102 can receive a request to lock locking mechanism 104 of module 106 of the data center. For example, a user may have installed or replaced module 106 and wish to lock it to prevent unauthorized removal and/or physical access. The user can cause the request to lock locking mechanism 104 of module 106 to be sent to controller 102. Module 106 can receive the request to lock locking mechanism 104 via the interface utilized to receive the request to unlock locking mechanism 104.

Controller 102 can lock locking mechanism 104 of module 106 of the data center in response to credentials having proper permissions. Similar to unlocking locking mechanism 104, controller 102 can authenticate a user associated with the request to lock locking mechanism 104 by comparing credentials, such as user information and/or attributes included with the lock request with permissions of the user. If the user has proper permissions, controller can lock locking mechanism 104.

In some examples, locking mechanisms 104 can include a default state. As used herein, the term "default state" can, for example, refer to a preset state that can be used if no choice is done in response to an event. For example, a default state of locking mechanisms 104 can be locked or unlocked.

In some instances, locking mechanisms 104 can revert to their default state in response to an event. For example, if module 106-1, controller 102-1, or locking mechanism 104-1 loses power, locking mechanism 104-1 can default to a locked state. In the event of a power loss, reversion of locking mechanism 104-1 to a locked state can prevent unauthorized physical access and/or removal of module 106-1. As another example, if module 106-1, controller 102-1, or locking mechanism 104-1 loses power, locking mechanism 104-1 can default to an unlocked state. Reversion of locking mechanism 104-1 to an unlocked state can allow removal and/or replacement or repair if, for example, module 106-1 suffers a failure.

In some examples, locking mechanisms 104-1, 104-2, 104-N can default to a locked state in response to an event (e.g., all of the locking mechanisms or a subset of the total amount of locking mechanisms can default to a locked state). In some examples, locking mechanisms 104-1, 104-2, 104-N can default to an unlocked state in response to an event (e.g., all of the locking mechanisms or a subset of the total amount of locking mechanisms can default to an unlocked state).

In some examples, controllers 102 can generate an access schedule of the locking mechanisms 104 including time periods in which the locking mechanisms 104 of the modules 106 of the data center can be unlocked. For example, controller 102-1 can generate an access schedule for locking mechanism 104-1 that includes time periods in which locking mechanism 104-1 of module 106-1 can be unlocked.

The time periods can be time periods of a day. For example, controller 102-1 can generate an access schedule for locking mechanism 104-1 such that locking mechanism 104-1 can be unlocked or locked between 8:00 AM and 5:00 PM, during weekdays, etc.

In some examples, module 106-1 can be a server. The time periods can be time periods when a computing workload of the server is below a threshold computing workload. As used herein, the term "computing workload" can, for example, refer to an amount of processing that a computing device has been given to do at a given time.

Controllers 102 can unlock locking mechanisms 104 of modules 106 in response to credentials having proper permissions, and the request to unlock locking mechanisms 104 is received by controllers 102 during a time period of the time periods of the access schedule in which the locking mechanisms 104 of the modules 106 are unlockable. For example, if the request to unlock locking mechanism 104-1 is received between 8:00 AM and 5:00 PM on a weekday, and the credentials included in the request to unlock locking mechanism 104-1 has proper permissions, controller 102-1 can unlock locking mechanism 104-1 of module 106-1. As another example, if module 106-1 is a server and the request to unlock locking mechanism 104-1 is received while the computing workload of the server is below a threshold computing workload, and the credentials included in the request to unlock locking mechanism 104-1 has proper permissions, controller 102-1 can unlock locking mechanism 104-1 of module 106-1.

Although controllers 102 are described above as generating an access schedule of a locking mechanism, examples of the disclosure are not so limited. For example, central management server 108 can generate an access schedule of locking mechanisms 104-1, 104-2, 104-N. For example, central management server 108 can generate an access schedule for locking mechanisms 104-1, 104-2, 104-N that includes time periods in which locking mechanisms 104-1, 104-2, 104-N of modules 106-1, 106-2, 106-N, respectively, can be unlocked. The time periods can be time periods of a day, and/or can be time periods in which a computing workload of modules 106-1, 106-2, 106-N are below a threshold computing workload, among other time periods.

In examples in which central management server 108 generates an access schedule of locking mechanisms 104-1, 104-2, 104-N, the access schedule can include the locking mechanisms 104 that can be locked or unlocked during the various time periods. For example, the access schedule generated by central management server 108 can include locking mechanism 104-1 that may be unlocked or locked between 8:00 AM and 12:00 PM, whereas locking mechanism 104-2 may be unlocked or locked between 1:00 PM and 5:00 PM. If the request to unlock locking mechanism 104-1 is received by controller 102-1 between 8:00 AM and 12:00 PM, and the credentials included in the request to unlock locking mechanism 104-1 has proper permissions, controller 102-1 can unlock locking mechanism 104-1 of module 106-1. However, if the request to unlock locking mechanism 104-1 is received before 8:00 AM or after 12:00 PM, and/or the credentials do not have proper permissions, controller 102-1 can refrain from unlocking locking mechanism 104-1.

Generating an access schedule by central management server 108 may include moving a computing workload of a first server (e.g., module 106-1) to a second server (e.g., module 106-2) such that the first server has a computing workload that is below a threshold computing workload. The computing workload of the first server may be moved at a specified time of day. In response to the computing workload of the first server (e.g., module 106-1) being moved to the second server, and credentials included in the request to unlock the first server have proper permissions, controller 102-1 can unlock locking mechanism 104-1.

A locking mechanism of a module of a data center, according to the disclosure, can allow for reduced instances of unauthorized physical access and/or removal of data center equipment. The modular locking mechanisms can provide security measures that can reduce instances of unauthorized physical access to data center equipment. The security measures can help to prevent accidental data center downtime, accidental failover/recovery, and/or accidental data loss, as well as help to prevent malicious software from being uploaded and/or theft of data center equipment.

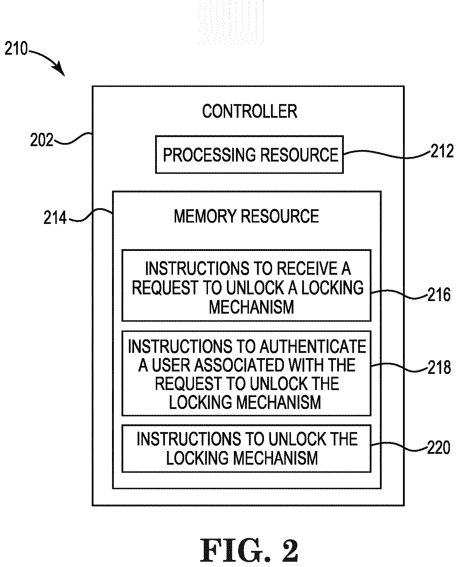

Figure 2 is a block diagram 210 of an example controller 202 to control a locking mechanism of a data center consistent with the disclosure. As described herein, the controller 202 (e.g., controller 102, previously described in connection with Figure 1) may perform a function related to a locking mechanism of a module of a data center. Although not illustrated in Figure 2, the controller 202 may include a machine-readable storage medium. Although the following descriptions refer to an individual processing resource and an individual machine-readable storage medium, the descriptions may also apply to a system with multiple processing resources and multiple machine-readable storage mediums. In such examples, the controller 202 may be distributed across multiple machine-readable storage mediums and the controller 202 may be distributed across multiple processing resources. Put another way, the instructions executed by the controller 202 may be stored across multiple machine-readable storage mediums and executed across multiple processing resources, such as in a distributed or virtual computing environment.

As illustrated in Figure 2, the controller 202 may comprise a processing resource 212, and a memory resource 214 storing machine-readable instructions to cause the processing resource 212 to perform an operation relating to a locking mechanism of a module of a data center. That is, using the processing resource 212 and the memory resource 214, the controller 202 may unlock and/or lock a locking mechanism of a module of a data center, among other operations. Processing resource 212 may be a central processing unit (CPU), microprocessor, and/or other hardware device suitable for retrieval and execution of instructions stored in memory resource 214.

The controller 202 may include instructions 216 stored in the memory resource 214 and executable by the processing resource 212 to receive a request to unlock a locking mechanism. For example, controller 202 may include instructions 216 stored in the memory resource 214 and executable by the processing resource 212 to receive a request to unlock a locking mechanism of a module of a data center. The locking mechanism can secure the module in the data center in order to prevent unauthorized physical access or removal of the module while the locking mechanism is in an engaged (e.g., locked) position.

The controller 202 may include instructions 218 stored in the memory resource 214 and executable by the processing resource 212 to authenticate a user associated with the request to unlock the locking mechanism. For example, controller 202 may include instructions 218 stored in the memory resource 214 and executable by the processing resource 212 to authenticate a user associated with the request to unlock the locking mechanism by comparing credentials included with the unlock request with permissions. Permissions can be by user. For example, the credentials of a user requesting to unlock the locking mechanism can be compared against permissions of the user. In some examples, the permissions can be tiered permissions.

The controller 202 may include instructions 220 stored in the memory resource 214 and executable by the processing resource 212 to unlock the locking mechanism. For example, controller 202 may include instructions 220 stored in the memory resource 214 and executable by the processing resource 212 to unlock the locking mechanism of the module of the data center in response to the credentials having proper permissions.

In this manner, the controller 202 may control physical access to modules of a data center by receiving the request to unlock the locking mechanism of the module of the data center, authenticate a user associated with the request to unlock the locking mechanism, and unlock the locking mechanism of the module of the data center to allow physical access to and/or removal of the module of the data center.

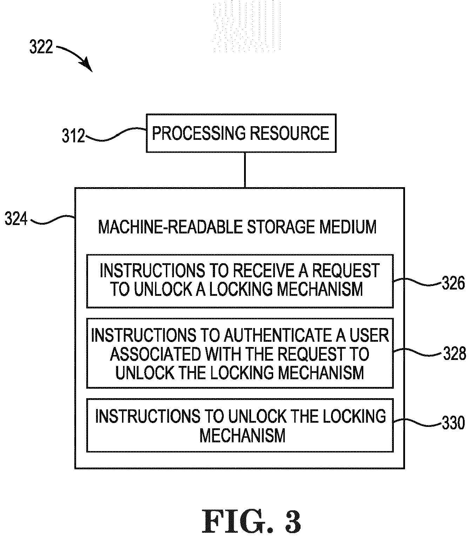

Figure 3 is a block diagram of an example of a system 322 consistent with the disclosure. In the example of Figure 3, system 322 includes a processing resource 312 (e.g., processing resource 212, previously described in connection with Figure 2) and a machine-readable storage medium 324. Although the following descriptions refer to an individual processing resource and an individual machine-readable storage medium, the descriptions may also apply to a system with multiple processing resources and multiple machine-readable storage mediums. In such examples, the instructions may be distributed across multiple machine-readable storage mediums and the instructions may be distributed across multiple processing resources. Put another way, the instructions may be stored across multiple machine-readable storage mediums and executed across multiple processing resources, such as in a distributed computing environment.

Processing resource 312 may be a central processing unit (CPU), microprocessor, and/or other hardware device suitable for retrieval and execution of instructions stored in machine-readable storage medium 324. In the particular example shown in Figure 3, processing resource 312 may receive, determine, and send instructions 326, 328, and 330. As an alternative or in addition to retrieving and executing instructions, processing resource 312 may include an electronic circuit comprising an electronic component for performing the operations of the instructions in machine-readable storage medium 324. With respect to the executable instruction representations or boxes described and shown herein, it should be understood that part or all of the executable instructions and/or electronic circuits included within one box may be included in a different box shown in the figures or in a different box not shown.

Machine-readable storage medium 324 may be any electronic, magnetic, optical, or other physical storage device that stores executable instructions. Thus, machine-readable storage medium 324 may be, for example, Random Access Memory (RAM), an Electrically-Erasable Programmable Read-Only Memory (EEPROM), a storage drive, an optical disc, and the like. The executable instructions may be "installed" on the system 322 illustrated in Figure 3. Machine-readable storage medium 324 may be a portable, external or remote storage medium, for example, that allows the system 322 to download the instructions from the portable/external/remote storage medium. In this situation, the executable instructions may be part of an "installation package". As described herein, machine-readable storage medium 324 may be encoded with executable instructions related to a locking mechanism of a module of a data center.

Instructions 326 to receive a request to unlock a locking mechanism, when executed by processing resource 312, may cause system 322 to receive, by a controller, a request to unlock a locking mechanism of a module of a data center. The request to unlock the locking mechanism can be received directly via an interface of the module by a user requesting the unlock of the locking mechanism or from a central management server.

Instructions 328 to authenticate a user associated with the request to unlock the locking mechanism, when executed by processing resource 312, may cause system 322 to authenticate a user associated with the request to unlock the locking mechanism by comparing credentials included with the unlock request with permissions. Credentials can include user information associated with the user requesting the unlock of the locking mechanism, and/or can include attributes associated with the user requesting the unlock of the locking mechanism.

Instructions 330 to unlock the locking mechanism, when executed by processing resource 312, may cause system 322 to unlock, by the controller, the locking mechanism of the module of the data center in response to the credentials having proper permissions such that he module is removable from the data center. For example, the controller can cause the locking mechanism of the module of the data center to disengage (e.g., unlock) such that the user can physically access the module. The user can upload software, remove and/or replace the module, perform maintenance and/or cleaning, among other actions.

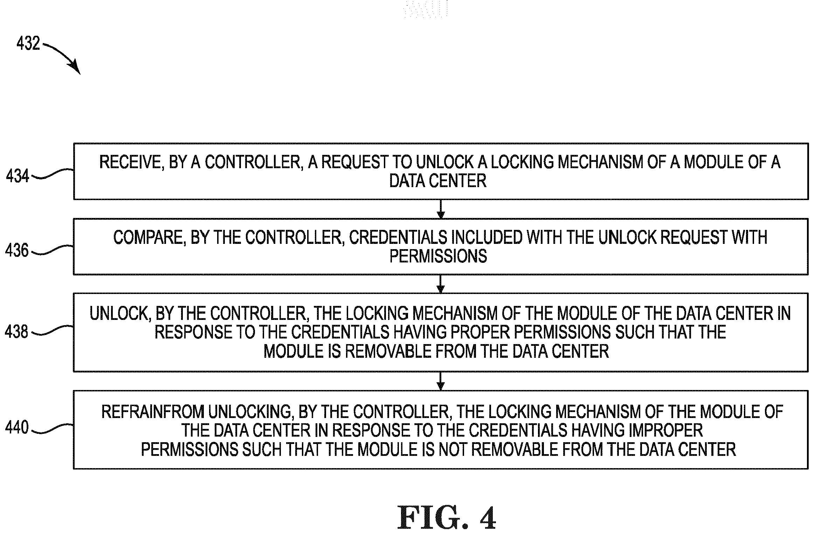

Figure 4 illustrates an example of a method 432 consistent with the disclosure. Method 432 may be performed by a controller (e.g., controller 102, 202, described in connection with Figures 1 and 2, respectively).

At 434, the method 432 may include receiving, by a controller, a request to unlock a locking mechanism of a module of a data center. The request to unlock the locking mechanism can be received directly via an interface of the module by a user requesting the unlock of the locking mechanism, or from a central management server. The interface can include various mechanisms to receive the request to unlock the locking mechanism. The interface can be, for example, a USB, keyboard, mouse, storage drive, display to receive an input (e.g., a username and/or password), biometric device, read device for a smart card, a key slot to receive a mechanical key with electronic authentication, and/or any combination thereof.

At 436, the method 432 may include comparing, by the controller, credentials included with the unlock request with permissions. Credentials can include user information associated with the user requesting the unlock of the locking mechanism, and/or can include attributes associated with the user requesting the unlock of the locking mechanism.

At 438, the method 432 may include unlocking, by the controller, the locking mechanism of the module of the data center in response to the credentials having proper permissions such that the module is removable from the data center. For example, the controller can cause the locking mechanism of the module of the data center to disengage (e.g., unlock) such that the user can physically access the module. The user can upload software, remove and/or replace the module, perform maintenance and/or cleaning, among other actions.

At 440, the method 432 may include refraining from unlocking, by the controller, the locking mechanism of the module of the data center in response to the credentials having improper permissions such that the module is not removable from the data center. For example, the controller may determine the user requesting the unlock of the locking mechanism may not have proper permissions. Accordingly, the controller may refrain from unlocking the locking mechanism of the module. By preventing physical access to the module to users who may not have proper permissions, a likelihood of unauthorized users physical accessing and/or removing modules of the data center can be reduced.

A controller can lock the locking mechanism of the data center. For example, an authorized user may have uploaded software, replaced a module, performed maintenance and/or cleaning of a module, and has requested the module be locked to prevent unauthorized physical access. The controller can compare credentials included with the lock request with permissions of the user, and lock the locking mechanism of the module of the data center in response to the credentials having proper permissions. In some examples, the controller can refrain from locking the locking mechanism of the module of the data center in response to the credentials having improper permissions.

In the foregoing detailed description of the disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the disclosure.

The figures herein follow a numbering convention in which the first digit corresponds to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2. Elements shown in the various figures herein can be added, exchanged, and/or eliminated so as to provide a plurality of additional examples of the disclosure. In addition, the proportion and the relative scale of the elements provided in the figures are intended to illustrate the examples of the disclosure, and should not be taken in a limiting sense. As used herein, the designators "M" and "N", particularly with respect to reference numerals in the drawings, indicates that a plurality of the particular feature so designated can be included with examples of the disclosure. The designators can represent the same or different numbers of the particular features. Further, as used herein, "a plurality of an element and/or feature can refer to more than one of such elements and/or features.

## Claims

1. A controller, comprising:
a processing resource; and
a memory resource storing machine-readable instructions to cause the processing resource to:
receive a request to unlock a locking mechanism of a module of a data center;
authenticate a user associated with the request to unlock the locking mechanism by comparing credentials included with the unlock request with permissions associated with the user; and
unlock the locking mechanism of the module of the data center in response to the credentials having proper permissions.

2. The controller of claim 1, wherein the credentials included with the request to unlock the locking mechanism includes user information.

3. The controller of claim 2, including instructions to cause the processing resource to:
compare the user information of a user with permissions associated with the user; and
unlock the locking mechanism of the module in response to the permissions of the user being proper.

4. The controller of claim 1, wherein the credentials included with the request to unlock the locking mechanism includes attributes.

5. The controller of claim 4, including instructions to cause the processing resource to:
compare the attributes of a user with permissions associated with the user; and
unlock the locking mechanism of the module in response to the permissions of the user being proper.

6. The controller of claim 1, including instructions to cause the processing resource to refrain from unlocking the locking mechanism of the module in response to:
the credentials included with the request to unlock the locking mechanism not having proper permissions; or
the user associated with the request to unlock the locking mechanism is not authenticated.

7. The controller of claim 1, wherein unlocking the locking mechanism of the module includes instructions to cause the processing resource to unlock the locking mechanism of a computing device of the data center

8. The controller of claim 1, wherein unlocking the locking mechanism of the module includes instructions to cause the processing resource to unlock the locking mechanism of a mechanical module of the data center.

9. A non-transitory machine-readable storage medium having stored thereon machine-readable instructions to cause a computer processor to:
receive a request to unlock a locking mechanism of a module of a data center;
authenticate a user associated with the request to unlock the locking mechanism by comparing credentials included with the unlock request with permissions associated with the user; and
unlock the locking mechanism of the module of the data center in response to the credentials having proper permissions such that the module is removable from the data center.

10. The medium of claim 9, comprising instructions to generate an access schedule of the locking mechanism including time periods in which the locking mechanism of the module of the data center can be unlocked.

11. The medium of claim 10, comprising instructions to unlock the locking mechanism of the module of the data center in response to:
the credentials having proper permissions; and
the request to unlock the locking mechanism being received during a time period of the time periods of the access schedule in which the locking mechanism of the module of the data center is unlockable.

12. A method, comprising:
receiving, by a controller, a request to unlock a locking mechanism of a module of a data center;
comparing, by the controller, credentials included with the unlock request with permissions;
unlocking, by the controller, the locking mechanism of the module of the data center in response to the credentials having proper permissions such that the module is removable from the data center; and
refraining from unlocking, by the controller, the locking mechanism of the module of the data center in response to the credentials having improper permissions such that the module is not removable from the data center.

13. The method of claim 12, wherein the method includes:
receiving, by the controller, a request to lock the locking mechanism of the module of the data center; and
locking, by the controller, the locking mechanism of the module of the data center in response to the credentials having proper permissions.

14. The method of claim 12, wherein the method includes:
receiving, by the controller, a request from a central management server to unlock a plurality of locking mechanisms of a respective plurality of modules of the data center; and
unlocking, by the controller, the plurality of locking mechanisms in response to credentials included with the unlock request of the plurality of locking mechanisms having proper permissions.

15. The method of claim 14, wherein the method includes comparing the credentials included with the unlock request with permissions stored at least one of locally and remotely from the controller.
